# EUROPEAN PATENT APPLICATION

(11) **EP 2 955 625 A1**
(43) Date of publication of application: **16.12.2015**
(21) Application number: 15170903.7
(22) Date of filing: 05.06.2015
(51) Int. Cl.: G06F 3/12, H04N 1/00

(54) **A PRINT MONITORING SYSTEM AND METHOD**

(30) Priority: 05.06.2014 GB 201410007
(71) Applicant: Canon Europa N.V., 1185 XB Amstelveen (NL)
(72) Inventor: HUSTER, Karsten, 49536 Lienen (DE)
(74) Representative: Northway, Daniel Robert

(57) **Abstract**

A print monitoring system 1 configured to prompt a user to collect at least one output of a printing device 13. The print monitoring system comprises an imaging device 14 configured to capture at least one image of the printing device 13. The imaging device 14 comprises determining means for determining, based on the captured image, whether or not the user has collected the output. Prompting means is provided to prompt a user to collect the output in the case that the determining means determines that the output has not been collected from the printing device 13.

## Description

When printing, photocopying, faxing or using any function of a multifunctional all-in-one printing device, paper may be output to a tray for collection by a user.

Once a function of the all-in-one printer has begun outputting paper to a tray users might, particularly if a document has a reasonably large number of pages, divert their attention and forget to collect the paper output to the tray of the printing device. Further, part of the output might be delayed due to the printing device performing adjustment of gradation, shading correction and the like, therefore resulting in the user inadvertently collecting only part of the output of their j ob

Leaving printed documents waiting for collection on a printing device, particularly if such documents are of a sensitive nature is undesirable.

According to a first aspect of the present invention there is provided a print monitoring system configured to prompt a user to collect at least one output of a printing device, the print monitoring system comprising: an imaging device configured to capture at least one image of the printing device; determining means for determining, based on the captured image, whether or not the user has collected the output; and prompting means configured to prompt a user to collect the output in the case that the determining means determines that the output has not been collected from the printing device.

In some embodiments the imaging means is configured to capture an image of the paper output tray of the printing device.

In some embodiments a first image is captured and stored by the imaging means before the printing device commences printing of a print job, and a second image is captured and stored by the imaging means after the printing device has completed the print job. In such embodiments the determining means may be configured to determine, based on a comparison of the first captured image and the second captured image, whether or not the user has collected the output of the printing device.

In some embodiments, the print monitoring system comprises a print server to manage print jobs and an imaging device. The print server comprises the prompting means and the imaging device comprises the imaging means and determining means.

In such embodiments, the imaging device may be configured to inform the print server whether or not the user has collected the output of the printing device.

In such embodiments the print server may be configured to determine the user, based on job information stored on a job database, and to prompt, if it is determined that the output of the printing device has not been collected, the determined user to collect the output of the printing device.

In such embodiments, the print server may be configured to generate an e-mail, based on job information stored on a job database, to prompt the user to collect the output of the printing device.

In such embodiments, information relating to the print job, the user, the imaging device and the printing device may be stored with each captured image.

According to a second aspect of the present invention there is provided a method of prompting a user to collect at least one output of a printing device, the method comprising: capturing at least one image of the printing device using an imaging means; determining, based on the captured image, whether or not the user has collected the output; and prompting a user to collect the output in the case that the determining means determines the output has not been collected from the printing device.

Further aspects of the present invention provide a program and a computer- readable storage medium storing a program as set out in claims 11 and 12.

An embodiment of the present invention will now be described, by way of example only, with reference to the accompanying drawings in which:
Figure 1 illustrates a printing monitoring system,
Figure 2 illustrates a hardware configuration of a client and print server,
Figure 3 illustrates a hardware configuration of a printer,
Figure 4 illustrates a hardware configuration of a network camera,
Figure 5 illustrates an example of processing performed in the print monitoring system 1, and
Figure 6 is a flow chart illustrating communication in the printing system.

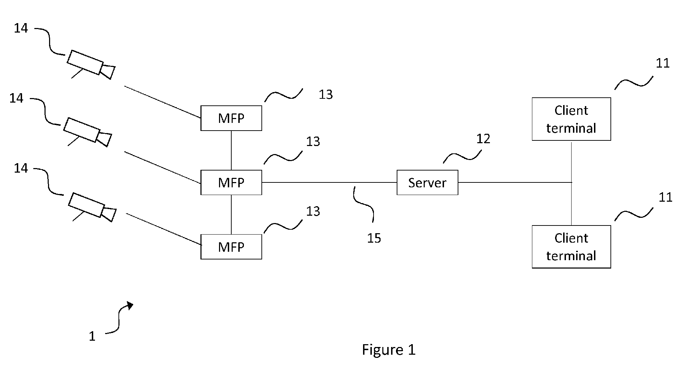

A print monitoring system 1, shown in figure 1, comprises client terminals 11, a print server 12 and N printers (where N is any positive integer) 13 connected to each other via a communication network 15. Each printer 13 within the communication network 15 has a network camera 14 associated with it.

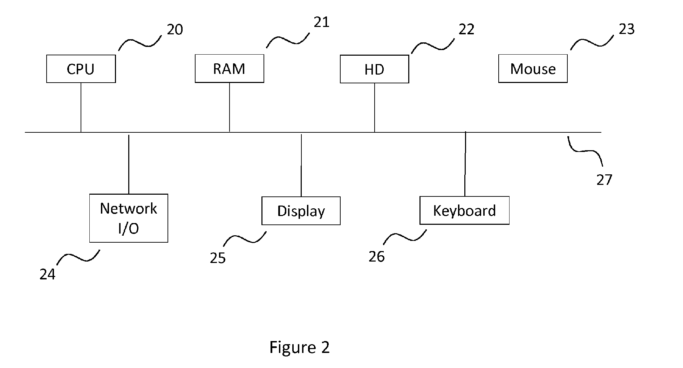

The hardware configuration of the client 11 and the print server 12 is similar and is shown schematically in figure 2. The hardware includes a central processing unit (CPU) 20, Random Access Memory 21 that acts as a storage area for the CPU 20, a hard disk drive 22, a pointing device such as a mouse 23, a network I/O 24 that allows the client 11, or print server 12, to communicate over the network 15, a display 25 such as a Liquid Crystal Display (LCD) for displaying information to a user, and a keyboard 26. Each of these components is connected to each other via a bus 27. This hardware configuration is for illustrative purposes only and may be supplemented by additional hardware commonly known in the art (such as graphics cards, wireless communication devices etc.).

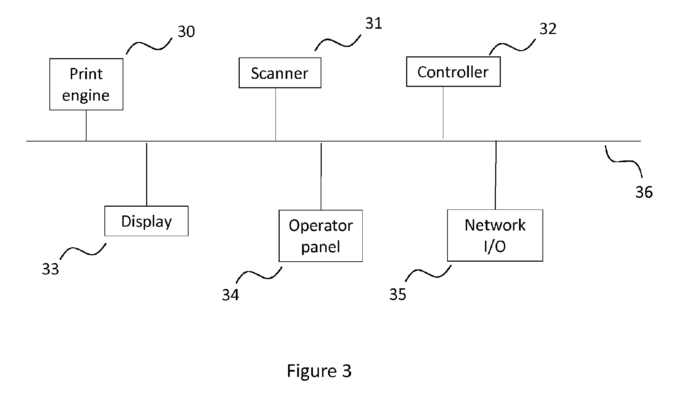

Figure 3 shows the hardware configuration of one of the printers 13. The printer 13 may be any type of printer, such as a multi-function printer (MFP), single function printer (SFP), ink-jet printer, laser printer, etc. However, for illustration, MFPs 13 will be described here. Each MFP 13 comprises a print engine 30, which consists of the hardware for printing onto a display medium such as paper, acetate, or some other display medium; a scanner 31; a controller 32 which controls operation of the various components of the MFP 13; a display panel 33, which is a touch screen display for displaying information to a user and for receiving commands by a user's touch; an operator panel 34, which includes buttons and/or other input devices for receiving user instructions; and a network I/O 35 that allows the MFP 13 to communicate over the network 15. The components of the MFP 13 are connected to each other via a bus 36. Optionally, the MFP 13 may include additional hardware of the types known in the art.

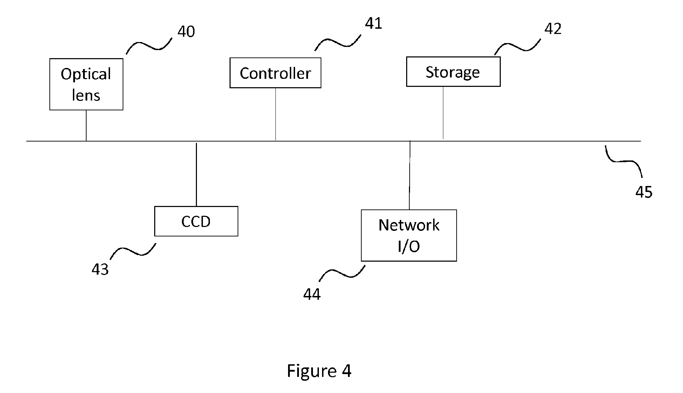

Figure 4 shows the hardware configuration of one of the network cameras 14. Typically, each network camera 14 comprises an optical lens 40 to capture light and bring it to a focus; a CCD 43 for converting light into electrical charge; a controller 41 which controls operations of the various components of the network camera 14; storage 42 for storing on-board analytics and, in the case of a decentralised network camera 14, direct recording of images; and a network I/O 44 that allows the network camera 14 to communicate over the network 15. This hardware configuration is for illustrative purposes only and may be supplemented by additional hardware commonly known in the art. The network camera 14 may be any type of camera capable of sending and receiving data via a computer network 15 or the internet. Network cameras 14 might be a centralised network camera 14 employing a central network video recorder (NVR) (not shown) to handle the recording, video and alarm management. Alternatively, the network cameras 14 might be decentralised and therefore do not require a central NVR because the cameras have storage functions built in and can thus record to any standard storage media. Each network camera 14 within the print monitoring system 1 is capable of communicating with the print server 12 using any common communication protocol such as HTTP.

The print server 12 includes print server management software to securely manage all print jobs in the system. The print server software includes the following components: a job database, an events database, access control lists one or more print drivers and/or spoolers for the MFPs and a workflow module. An operation of a user releasing a print job from their personal secure queue will be described later.

The print management software of the print server 12 holds a central print queue or job database for all MFPs 13 on the communication network 15. Each user's print job is stored in the job database of the print server 12 until the jobs are released by the job owner at a desired MFP 13 on the communication network 15.

In the case that a job owner wishes to collect their print job they must authenticate at a desired MFP 13. The user can be identified at the device 13 by any one of a number of authentication techniques such as fingerprint identification, PIN number, username and password, magnetic swipe card, smart card or proximity card. The MFP 13, in addition to the operator panel 34 where a username and password or PIN can be entered, might have a reading unit attached (not shown) capable of reading fingerprints, swipe cards, smart cards or proximity cards. The user authenticates at their desired MFP 13 and their personal print job stored in the job database of the print server 12 is released and sent to the designated MFP 13. The user can select, using the operator panel 34, which print job should be executed by the MFP 13, the job is released and the printing function begins. If a print job is no longer required, the user can choose to delete the job rather than printing it.

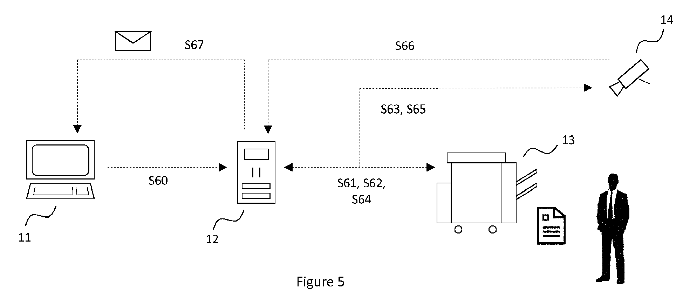

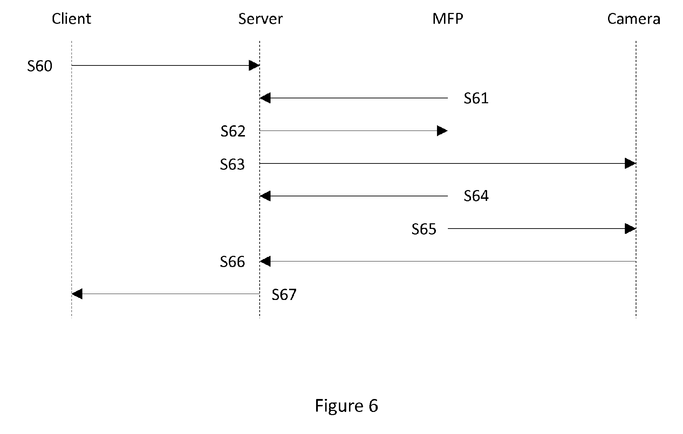

Figure 5 further illustrates the print monitoring system 1 and figure 6 further illustrates a sequence of communications sent over the communication network 15 between the client terminal 11, print server 12, MFP 13 and network camera 14. An operation of the print monitoring system 1 will now be described in which a user instructs a print job from a client terminal 11 and the print job is executed on an MFP 13 of the user's choice.

First, at step S60 the user sends, using a printer driver at the client terminal 11, a print job to the job database of the print server 12. The print job is held securely in the job database until the case that the user authenticates at their desired MFP 13.

Once the user has been authenticated at a MFP 13, the MFP 13 sends a request S61 to the print server 12 to release, to the designated MFP 13, a list of the user's print jobs from the job database. The job owner can then choose, using the operator panel, whether to print or delete the print job.

Should, at this point, the print job owner decide to execute the printing function an acknowledgement S62 is sent from the designated MFP 13 to the print server 12, confirming that printing has commenced.

Parallel to, or at a time slightly after a print job is sent to the MFP 13 and commenced, a first image capture command S63 is sent to the network camera 14 which is associated with the designated MFP 13. The network camera 14 is configured to focus on a region of interest (ROI) on its associated MFP 13. The ROI could, for example, be a paper output tray of a MFP 13. Upon receiving the first image capture command from the print server 12, the associated network camera 14 captures a first image of the ROI before any paper or printing medium has been output from the MFP 13. The first captured image is stored using the storage unit 42 of the network camera 14.

The MFP 13 continues to execute the print job and once the print job completes, an acknowledgment S64 is sent to the print server 12 from the designated MFP 13. Parallel to, or at a time slightly after the print job acknowledgement is sent to the print server 12 a second image capture command S65 is sent to the designated MFP's 13 associated network camera 14.

The second image capture command S65 received by the network camera 14 prompts the network camera 14 to capture a second image of the ROI, after print job completion. The second captured image is stored using storage unit 42 of the network camera 14. Additional information such as print job id, image capture time, network camera id, printing device id and user id are stored with each of the captured images.

Many modern network cameras 14 contain embedded analytic content and capabilities to support on-board analytics. It is preferable for storage and analysis/comparison of captured images to, at least in the first instance, be performed at the network camera 14 to reduce traffic on the communication network 15. Captured images, associated with a print job, are analysed to determine whether the printed document has been collected. Known techniques such as using the sum of absolute difference (SAD) algorithm to measure the similarity between image blocks, or edge detection for identifying points in a digital image at which image brightness changes sharply or has discontinuities might be used to determine whether the printed documents have been removed from the output tray of the MFP 13. Further, SAD might be used in conjunction with edge detection. Further, histogram comparison might be used to compare the two captured images to determine whether the printed documents have been collected from the output tray of the MFP 13.

Whilst this embodiment stores captured images and performs analytics on the captured images within the network camera 14 it is to be understood that analysing the captured images and determining whether the printed document has been collected might, alternatively, be performed on a central NVR or on the print server 12.

If it is determined that the user's printing has been collected from the output tray of the MFP 13, the command S66 sent to the print server 12 indicates that the printed documents have been removed.

In the case that it is determined the user's printing has not been collected from the output tray of the MFP 13, the command S66 sent to the print server 12 indicates that the printed documents have not been removed.

Further, in the case that it is determined that the user's printed documents have not been collected, the print server 12 generates a notification such as, for example, an e-mail to be sent to the user S67. The user's identity and e-mail address are determined by referencing the job information in the job database of the print server 12 associated with the user's printing that was subject to the image capture comparison. Additionally, the user's personal details and job information can be stored along with the captured images in the storage 42 of the network camera 14 and sent to the print server 12 with/in addition to the command sent at step S66.

The above has been described with reference to an individual print job being released from an MFP 13 by the print job owner. It is to be understood however that the print monitoring system 1 can also be applied to faxing and any other function of a MFP 13 where paper might be output to a tray for collection by the user.

Further, the above has been described with specific reference to a print job where a first and second image is captured for each individual print job. It is, however, to be understood that in a further embodiment and, in particular, in the case that a print job owner releases, at the same time, from the print server 12 a number of print jobs to the user's MFP 13 of choice therefore creating a batch of print jobs at the MFP 13, the step of the first command for image capture as described in S63 can be sent at the same time as described above - simultaneous to, or at a time slightly after a print job is released - but the second command for image capture as described in step S65 can instead be sent after the final job in the user's list of print jobs has completed.

Further, image comparison can be achieved without always having to capture a first image each time the print monitoring system 1 is in operation. For example, it might be possible to capture a first image of an empty output tray at the time the MFP is installed/configured, store the captured image, and use the stored image along with a second captured image to determine whether or not the user has collected their printed documents.

The above described embodiment describes step S65, a second image capture command sent to the network camera 14 parallel to, or at a time slightly after the print job acknowledgement is sent to the print server 12 from the MFP 13. The second image capture command might alternatively be generated at a predetermined time after each individual print job has completed or at a predetermined time after the final print job in a batch of print jobs has completed.

Further, the second image capture command described at step S65 can be generated in the case that, or at a predetermined time after, the user logs out of the MFP 13. Additionally, the second image capture command described at step S65 can be generated in the case that, or at a predetermined time after, the MFP 13 has sat idle for an extended period of time and automatically logs the user out so that the MFP 13 can return to a mode in which a user is required to authenticate their personal details to operate any function of the MFP 13.

Further still, the second image capture command described at step S65 can be generated in the case that a new user is authenticated at the MFP 13.

According to an alternative embodiment and, in accordance with the capabilities of modern network cameras 14, it may not be necessary for the print server 12 to receive a command/acknowledgement from the network camera 14. Modern network cameras 14 have the capabilities to generate e-mail alerts and notifications which can be sent directly to the print job owner if it is determined by the network camera 14 that the paper has been output onto the tray of an MFP 13 and has not been collected at the time of image comparison.

Further, it is to be understood that a print monitoring system 1 where it is not necessary for a job to be released from a print server 12, but the job still results in paper being output to a paper output tray of a MFP 13 for collection by a user might be implemented without a print server 12 and/or client terminal 11. Photocopying, for example, might still require a user to authenticate their personal details at an MFP 13 of their choice and also result in outputting paper onto the tray of an MFP 13. In this case, the function of sending commands for image capture can be performed at the MFP 13 itself and does not require the presence of a print server 12 to hold and release the user's job, or a client terminal 11 to release a job to the print server 12. User identification, storage of personal details, image capture, image comparison and notification to the user can all be achieved without the presence of a print server 12 and/or client terminal 11.

## Claims

1. A print monitoring system configured to prompt a user to collect at least one output of a printing device, the print monitoring system comprising:
imaging means configured to capture at least one image of the printing device;
determining means for determining, based on the captured image, whether or not the user has collected the output; and
prompting means configured to prompt a user to collect the output in the case that the determining means determines that the output has not been collected from the printing device.

2. A print monitoring system according to claim 1, wherein the imaging means is configured to capture an image of the paper output tray of the printing device.

3. A print monitoring system according to claim 1 or claim 2, wherein a first image is captured and stored by the imaging means before the printing device commences printing of a print job, and a second image is captured and stored by the imaging means after the printing device has completed the print job.

4. A print monitoring system according to claim 3, wherein the determining means is configured to determine, based on a comparison of the first captured image and the second captured image, whether or not the user has collected the output of the printing device.

5. A print monitoring system according to any preceding claim, wherein the print monitoring system comprises a print server to manage print jobs in the system, which print server comprises the prompting means, and an imaging device comprising the imaging means and determining means.

6. A print monitoring system according to claim 5, wherein the imaging device is configured to inform the print server whether or not the user has collected the output of the printing device.

7. A print monitoring system according to claim 5 or 6, wherein the print server is configured to determine the user, based on job information stored on a job database, and to prompt, if it is determined that the output of the printing device has not been collected, the determined user to collect the output of the printing device.

8. A print monitoring system according to any of claims 5 to 7, wherein the print server is configured to generate an e-mail, based on job information stored on a job database, to prompt the user to collect the output of the printing device.

9. A print monitoring system according to any of claims 5 to 9, wherein information relating to the print job, the user, the imaging device and the printing device is stored with each captured image.

10. A method of prompting a user to collect at least one output of a printing device, the method comprising:
capturing at least one image of the printing device using an imaging means;
determining, based on the captured image, whether or not the user has collected the output; and prompting a user to collect the output in the case that the determining means determines the output has not been collected from the printing device.

11. A program which, when run on a device, causes the device to execute a method in accordance with claim 10.

12. A computer- readable storage medium storing a program according to claim 11.

13. A system, method or program to prompt a user to collect at least one output of a printing device substantially as hereinbefore described with reference to drawings 1 to 6.
